# EUROPEAN PATENT APPLICATION

(11) **EP 3 557 044 A1**
(43) Date of publication of application: **23.10.2019**
(21) Application number: 18168457.2
(22) Date of filing: 20.04.2018
(51) Int. Cl.: F03D 1/06

(54) **BLADE SEGMENT FOR A ROTOR BLADE OF A WIND TURBINE INSTALLATION AND A ROTOR BLADE WITH THIS BLADE SEGMENT**

(71) Applicant: youWINenergy GmbH, 27568 Bremerhaven (DE)
(72) Inventor: Rohden, Rolf, 26607 Aurich (DE)
(74) Representative: Bird & Bird LLP

(57) **Abstract**

Blade segment comprising a segment body extending along a longitudinal axis A, having a cavity accessible through a first axial end of the segment body, and having a segment wall section extending from the first axial end along axis A and limiting the cavity, and a supporting device arranged inside the cavity, the supporting device having a first panel and a second panel, wherein a panel wall section of each of the panels is mechanically and/or materially connected with the segment wall section inside the cavity, wherein the first panel arranged adjacent to the first axial end and is spaced apart from the second panel along axis A, wherein the first panel has a recess accessible through the first axial end, wherein the recess is arranged and dimensioned for holding a protrusion of a second blade segment, wherein the second panel is arranged to support an end of the protrusion.

## Description

The present invention relates to a blade segment for a rotor blade for a wind turbine installation and to a rotor blade comprising this blade segment. The blade segment may advantageously be used for new wind turbine installations as well as for refurbishing existing wind turbine installations.

The applicant knows of a segmented rotor blade, a first segment of which has a cavity limited by two webs inside the first segment. A second segment has a spar which can be accepted between the two webs. The spar is fixed inside the first segment by means of two bolts held in corresponding holes in the two webs and in the spar.

### Problem and solution

Rotor blades experience time varying mechanical stresses while the wind turbine installation is operated. It is an object of the present invention to provide an improved blade segment and rotor blade comprising this blade segment.

The above object is solved by the blade segment according to claim 1 (first aspect), by a rotor blade according to claim 9 comprising at least one of these blade segments, and by methods to manufacture the blade segment and the rotor blade. The depending claims are directed to preferred embodiments.

The blade segment according to the first aspect comprises a segment body extending along a longitudinal axis A. The segment body has a cavity accessible through a first axial end of the segment body. Further, the segment body has a segment wall section extending from the first axial end along axis A and limiting the cavity. Axis A can be arranged in parallel with the leading and/or trailing edge of the blade segment. Further, the blade segment has a supporting device arranged inside the cavity. The supporting device has a first panel and a second panel, wherein a panel wall section of each of the panels is mechanically and/or materially connected with the segment wall section inside the cavity. The first panel is arranged adjacent to the first axial end and is spaced apart from the second panel along axis A. The first panel has a recess accessible through the first axial end and the recess is arranged and dimensioned for holding a protrusion of a second blade segment. The second panel is arranged to support an end of the protrusion.

The supporting device serves to receiving forces and torques resulting from the second blade segment during operation of the rotor blade or wind turbine. The supporting device itself is held by the hollow segment body. The spacing between the two panels helps to reduce reaction forces. The blade segment may offer the advantage of improved durability of the rotor blade. Thereby, the blade segment and the rotor blade comprising this blade segment are improved.

Within the concept of the present invention, the blade segment according to the first aspect forms a part of a rotor blade comprising two or more blade segments. Each of the blade segments can be fabricated and sent to an installation site of a wind turbine separately. Usually, the two or more blade segments are connected on the installation site to form a rotor blade. After connecting, a second blade segment extends from the first axial end of the blade segment according to the first aspect. An opposite axial end may be connected to a rotor hub. The blade segment has a segment body limiting a cavity. So, the blade segment and its segment body are hollow.

Within the concept of the present invention, a supporting device serves to hold a protrusion extending from the second blade segment of the same rotor blade and to impose reaction forces on the protrusion. The protrusion may extend through the recess of the first panel towards the second panel. After fabrication, the supporting device is arranged inside the cavity of the blade segment and its segment body. The supporting device may reduce the mechanical stress on the segment body.

### Preferred embodiments

Preferred embodiments are explained in the following. These may be combined with each other, unless stated otherwise.

According to a preferred embodiment, a first surface of the first panel is essentially perpendicular to axis A, wherein the first surface extends over more than half of the chord length of the blade segment at the first panel's axial position along axis A. The first panel can be made from metal. The first panel can have a thickness of more than 1/15 of the chord length of the blade segment at the first panel's axial position along axis A. This can serve to improve the mechanical stability of the connection between the first panel and the segment body. This may help to distribute a reaction force over a larger surface area of the segment body. The first panel can be positively engaged with the segment body inside the cavity prior to connecting the first panel with the segment body. This can simplify manufacturing the blade segment.

According to a another preferred embodiment, a first surface of the second panel is essentially perpendicular to axis A, wherein the first surface extends over more than half of the chord length of the blade segment at the second panel's axial position along axis A. The second panel can be made from metal. The second panel can have a thickness of more than 1/15 of the chord length of the blade segment at the second panel's axial position along axis A. This can serve to improve the mechanical stability of the connection between the second panel and the segment body. This may help to distribute a reaction force over a larger surface area of the segment body. The second panel can be positively engaged with the segment body inside the cavity prior to connecting the second panel with the segment body. This can simplify manufacturing the blade segment.

The blade segment of another preferred embodiment can have an first aerodynamic profile at a first axial position along axis A and perpendicular to axis A and a second aerodynamic profile at a second axial position along axis A and perpendicular to axis A. The chord length of the first profile can be longer than the chord length of the second profile. The thickness of the first profile measured perpendicular to its chord can be greater than the thickness of the second profile measured perpendicular to its chord. This can serve to provide the cavity for supporting device. The chord of the first profile and the chord of the second profile can form an angle of up to 3°, axis A being the origin of this angle.

In another preferred embodiment, the first and second panels are mechanically connected to opposite ends of one or more struts of the supporting device. The one or more struts can be rods and/or can be made from metal. This may increase the mechanical stability of the supporting device and/or its positioning before connecting the panels with the segment body.

The second panel of a preferred embodiment has a projection extending towards the first panel, the projection being arranged for mechanically connecting with the protrusion of the second blade segment. The projection can have a ridge or rib for supporting a lateral surface of the projection. The protrusion may have a hollow end matching and arranged to accept the projection of the second panel. This may help to transfer a force between the protrusion and the second panel.

Alternatively, the second panel can also have a recess for holding the protrusion. Thus, the protrusion of the second blade segment can extend through both recesses of the supporting device, when the second blade segment is connected with the blade segment according to the first aspect. This may increase the durability of the connection.

The recess, preferably an inner surface of the recess, is preferably arranged for materially connecting with the protrusion, preferably with an outer or lateral surface of the protrusion. A cured resin may serve to support or establish this material connection.

Another preferred embodiment comprises two shells, together forming the segment body and limiting the segment body's cavity, wherein an edge of one of the shells is materially connected with an edge of the other shell. One of the shells may be a suction side shell and the other can be a pressure side shell. These shells can be manufactured separately and can be joined by an adhesive. Preferably, the segment body has built in webs or stiffeners or the like (supporting structures), particularly for its reinforcement. These supporting structures the supporting structure may connect the pressure side to the suction and they can improve the strength and load caring capacity of the blade segment or rotor blade. This may help to reduce the cost of manufacturing. This may also simplify arranging the supporting device inside the cavity and/or connecting the supporting device with the segment body.

In another preferred embodiment, the panel wall sections are mechanically and/or materially connected with a shell wall section of one of the shells. The panels can be positively engaged with the shell wall. The panels can be similarly connected with the other shell. This may help to distribute a reaction force over a larger surface area of the segment body and/or may improve the mechanical connection between the panels and the shell.

A preferred device to manufacture one of the blade segments as explained before (segment manufacturing device) comprises a supporting device fixture for aligning the supporting device inside the segment body's cavity or adjacent to one of the shell. The segment manufacturing device can have a first resin supply arranged for supplying resin or an adhesive paste to materially connect the panel wall sections with the segment wall section. Preferably, the first resin supply comprises resin volume control. The supporting device fixture can have a frame against which the segment body and the supporting element can abut. The device can have a mould having the shape of the blade segment or of one of the shells, on which one or more layers of fabric can be placed. The device can have a resin supply for supplying resin to the fabric in the mould. This segment manufacturing device may help to increase the reliability of the manufacturing of the blade segment and/or to improve the alignment of the second blade segment with axis A.

A preferred rotor blade comprises a first blade segment as explained before and at least a second blade segment having the protrusion, wherein the protrusion can be arranged inside, preferably materially connected with an inner wall of, the recess of the supporting device of the first blade segment, particularly for joining the first and the second blade segment preferably on the installation site. This design may reduce the cost of transport to the installation site. The width of the protrusion extending outside of the second blade segment and along its longitudinal axis can be greater than 1/4 of the chord length of the second blade segment at its end face. The length of the protrusion outside the second blade segment can be at least 9/10 of chord length of the blade section, preferably at its end face. This could improve the mechanical stability of rotor blade..

According to a preferred embodiment of the blade, a gap between an inner surface of the recess and an outer or lateral surface of the protrusion does not exceed 12 mm, when the recess holds the protrusion. The gap can accept a resin for materially connecting the inner surface of the recess with an outer surface of the protrusion. The gap serves to limit the thickness of the resin layer or cured resin. This gap may help to increase the mechanical stability and/or durability of the material connection of recess and projection. The gap may allow a positive fit of the protrusion inside the recess.

Preferably, the second panel can also have a recess for holding the protrusion. If so, the protrusion of the second blade segment can extend through both recesses of the supporting device, when the second blade segment is connected with the blade segment according to the first aspect. This may increase the durability and/or stability of the rotor blade.

Preferably, the rotor blade comprises a cable essentially extending along axis A or along the rotor blade. The cable can comprise at least one material from the following group of materials including, copper, steel, aluminium and carbon rovings. A first end of the cable can be connected with or supported by the first blade segment and the opposite end can be connected with or supported by the second blade segment. The cable can urge the two blade segments together, which may help to prevent one of the blade segments from separating from the remaining rotor blade. Further, the cable can serve as a lightning conductor, for data transmission and/ or signal transmission through the rotor blade.

Another preferred embodiment of the rotor blade comprises a first blade segment as explained before and the second blade segment having the protrusion. The second blade segment can be designed according to the first aspect and can thus have its own supporting device. A section of the protrusion extends into the second blade segment and is mechanically and/or materially connected inside the second blade segment. The protrusion can be a separately cured spar. This may simplify the manufacturing. This embodiment may allow to adapt the protrusion to the overall length of the rotor blade, particularly to use a longer protrusion when the length of the rotor blade or one of its blade segments is increased.

A preferred embodiment of the rotor blade comprises three blade segments. The first and second blade segment can have the supporting device, as explained before. The second and third blade segment can have the protrusion to be held in the supporting devices of the first and second blade segments. Preferably, the aerodynamic profiles of the three blade segments differ. One or more of the blade segments can have a first aerodynamic profile at a first axial position along axis A and a second aerodynamic profile at a second axial position along axis A. The aerodynamic profiles can be morphed so that maximum advantage of the combination of aerofoils profiles can be derived. This can offer the advantage of an improved exploitation of the wind conditions at the installation site.

A preferred device to manufacture a rotor blade (blade manufacturing device), particularly one of the rotor blades explained before, comprises a segment fixture for supporting the first blade segment according to the first aspect and the second blade segment. The segment fixture can be arranged for guiding the second blade segment towards the first blade segment. Afterwards, the protrusion of the second blade segment is held in the supporting device of the first blade segment. Further, the device has a second resin supply arranged for providing resin into the recess of the first blade segment. There may be two or more inlets to feed resin into the recess. Thereby, the distance the viscous resin has to travel between the recess and the protrusion can be reduced. The resin may be distributed more uniformly between an inner wall of the recess and a lateral wall of the protrusion. The resin supply can be arranged to impose a pressure gradient to support the flow of resin into the recess particularly between an inner wall of the recess and a lateral wall of the protrusion. Preferably, the device has a heating device for curing the resin inside the supporting device's recess. This blade manufacturing device can help to simplify and/or improve the quality of joining blade segments on the installation site.

A preferred method to manufacture a blade segment as explained before, involves the following steps:
S1 providing the segment body, preferably in the segment manufacturing device or a mould,
S2 positioning the supporting device inside the cavity, preferably with the supporting device fixture,
S3 mechanically and/or materially connecting, preferably with a resin, the panel wall section with the segment wall section inside the cavity.

Step S3 can be performed with a curable resin and/or with a resin supply. This method can be carried out in a work shop under favourable conditions, rather than on the installation site. So, the quality of the blade segment can be improved.

According to preferred embodiment, step S1 includes providing the first shell mentioned before, preferably inside the segment manufacturing device or a mould, step S2 includes positioning the supporting device in contact with the inside of the first shell, step S1 includes positioning the second shell mentioned before in contact with the supporting device and the first shell, such that an edge of the second shell is adjacent to an edge of the first shell. Afterwards, step S3 can be performed, preferably with a curable resin. Preferably, the shells' edges at both the leading edge of the blade segment and at its trailing edge are connected materially. This method may allow to simplify the positioning of the supporting device inside the cavity and/or to reduce a position tolerance of the supporting device with respect to the blade segment.

According to another preferred embodiment, the supporting device and one or more layers of fabric are positioned in a mould. Then, resin is supplied to the fabric. Afterwards, the resin is cured. This can lead to a first shell connected with the supporting device but still needing the second shell for completion of the blade segment. If the supporting device is wrapped in the one or more layers of fabric, then these steps can result in the finished blade segment. This can help to reduce the effort of manufacturing.

A preferred method to manufacture one of the explained rotor blades, preferably on an installation site, has the following steps:
S4 providing the first blade segment having the supporting device, preferably in the blade manufacturing device,
S5 guiding the second blade segment having the protrusion towards the first blade segment, preferably with the blade manufacturing device, and
S6 mechanically and/or materially connecting the protrusion inside the recess.

This preferred method can have the following additional step:
S7 mechanically and/or materially connecting a section of the protrusion inside the second blade segment such that the protrusion partly extends into the environment, preferably before step S5, preferably in a work shop.

This may simplify the manufacturing and/or may allow to adapt the protrusion to the overall length of the rotor blade, particularly to use a longer protrusion when the length of the rotor blade or one of its blade segments is increased.

### Exemplary embodiments

The figures show exemplary embodiments of the first blade segment according to the first aspect of the invention and other exemplary embodiments.

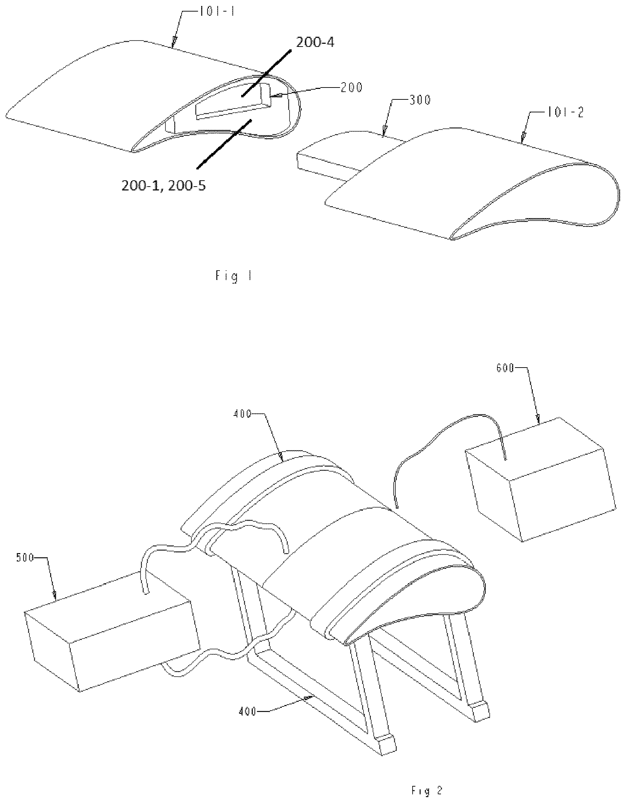

Figure 1 schematically shows an embodiment of the blade segment 101-1 according to the first aspect of the invention. The blade segment has a segment body extending along a longitudinal axis A. The segment body has a cavity accessible through a first axial end of the segment body. Further, the segment body has a segment wall section extending from the first axial end along axis A and limiting the cavity. Axis A can be arranged in parallel with the leading and/or trailing edge of the blade segment. Further, the blade segment has a supporting device 200 arranged inside the cavity. The supporting device has a first panel 200-1 and a second panel 200-2 (concealed). A panel wall section of each of the panels is mechanically and/or materially connected with the segment wall section inside the cavity. The first panel is arranged adjacent to the first axial end and is spaced apart from the second panel along axis A. While the first panel is visible adjacent to the first axial end of the blade segment 101-1, the second panel is concealed by the segment body. The first panel has a recess accessible through the first axial end and the recess is arranged and dimensioned for holding a protrusion of a second blade segment. The second panel is arranged to support an end of the protrusion.

A first surface 200-5 of the first panel 200-1 is essentially perpendicular to axis A, and the first surface extends over more than half of the chord length of the blade segment at the first panel's axial position along axis A. The first panel can be made from metal. The first panel can have a thickness of more than 1/15 of the chord length of the blade segment at the first panel's axial position along axis A. This can serve to improve the mechanical stability of the connection between the first panel and the segment body. This may help to distribute a reaction force over a larger surface area of the segment body. The first panel can be positively engaged with the segment body inside the cavity prior to connecting the first panel with the segment body. This can simplify manufacturing the blade segment.

The segment bodies can comprise built in webs or stiffeners or the like (supporting structures), particularly for reinforcement. The supporting structures can improve the strength and load caring capacity of the blade segment or rotor blade. The segment body can have a suction side shell and a pressure side shell. These shells can be manufactured separately and can be joined by an adhesive. These shells can be manufactured separately and can be joined by an adhesive. These supporting structures may connect the pressure side shell to the suction side shell.

Figure 1 also shows one of the second blade segments 101-2 having the protrusion 300 to be held in the recess. Both blade segments have an aerodynamic profile. Both blade segments can be manufactured in a work shop and transported to an installation site, separately. This may reduce cost of transportation. A section of the protrusion can also extend into the second blade segment and can be mechanically and/or materially connected inside the second blade segment. The protrusion can be a separately cured spar.

Figure 2 schematically shows a blade manufacturing device. This device can be used to manufacture one of the rotor blades explained before. The blade manufacturing device has segment fixture 400 for supporting the first blade segment according to the first aspect and the second blade segment. The segment fixture can be arranged for guiding the second blade segment towards the first blade segment. Afterwards, the protrusion of the second blade segment is held in the supporting device of the first blade segment. Further, the device has a second resin supply 500 arranged for providing resin into the recess of the first blade segment. There may two or more inlets for a more uniform distribution of the resin within the recess. The resin supply can have a resin volume control function to check the correct supply of resin. The blade manufacturing device has a heating device 600 for curing the resin inside the supporting device's recess.

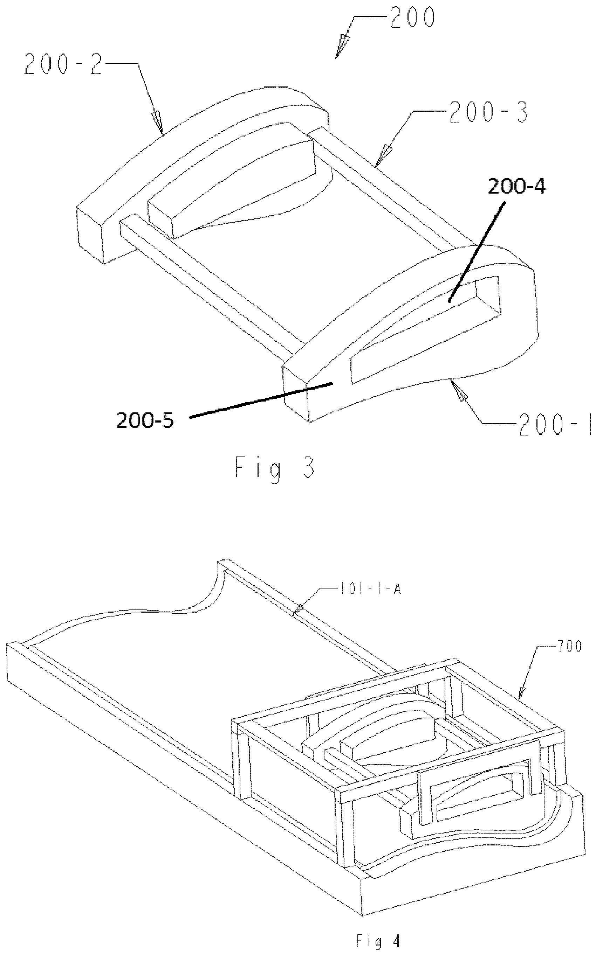

Figure 3 schematically shows an embodiment of the supporting device 200. The supporting device has a first panel 200-1 having the recess 200-4 and a second panel 200-2 having a projection. The two panels are spaced apart and connected by several struts 200-3, only two of which are shown. The supporting device can resemble a cage. The panels and the struts can be connected with each other by welding, with bolts or other mechanical fasteners or with an adhesive. The panels and the struts can be made from metal. The projection of the second panel 200-1 is arranged for connecting with the protrusion 300 of the second blade segment 101-2. The projection can have a ridge or rib for supporting a lateral surface of the projection. The protrusion may have a hollow end matching and arranged to accept the projection of the second panel. The supporting device can have a length along axis A of more than 2700 mm when the chord length at the axial position of the supporting device is greater than 2400 mm. The thickness of the first panel 200-1 along axis A can be about 1/10 of the chord length at the axial position of the first panel. The thickness along axis A of the second panel 200-2 including its projection can be about 1/5 of the chord length at the axial position of the second panel.

Figure 4 shows schematically a state of an exemplary method to manufacture one of the blade segments comprising two shells. A first shell 100-1-A, here a pressure side shell, is placed in a mould. The supporting device 200 is positioned in contact with an inner surface of the first shell. The supporting device fixture 700 is positioned such that the first shell and the supporting device abut against it. Next a resin could be applied to the area where the panels of the supporting device and the first shell are in contact. The segment manufacturing device can have a volume controlled resin supply with a resin volume control. Alternatively or additionally, the supply of resin can be checked visually, i.e. resin showing up at particular point indicates a sufficient volume of resin. The resin can be cured with a heating device. Alternatively, the resin cures by itself without the application of heat.

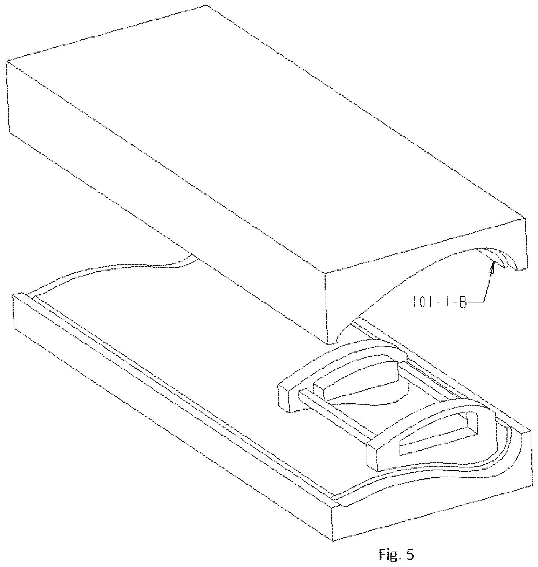

Figure 5 schematically shows another step of an exemplary method to manufacture one of the blade segments comprising two shells. The supporting device fixture is already removed. A second shell 100-1-B is held in a lid part of the mould. A lid part of the mould is ready for lowering the second shell onto the first shell and the supporting device. Afterwards, resin or an adhesive paste can be supplied along longitudinal edges of the two shells and to the top surfaces of the panels of the supporting device and can be cured, while the mould is closed. After curing, the mould is opened and the blade segment can be removed.

## Claims

1. Blade segment (101-1) for a rotor blade of a wind turbine installation, the blade segment comprising:
a segment body extending along a longitudinal axis A, having a cavity accessible through a first axial end of the segment body, and having a segment wall section extending from the first axial end along axis A and limiting the cavity,
a supporting device (200) arranged inside the cavity, the supporting device having a first panel (200-1) and a second panel (200-2), wherein a panel wall section of each of the panels is mechanically and/or materially connected with the segment wall section inside the cavity, wherein the first panel is arranged adjacent to the first axial end and is spaced apart from the second panel along axis A, wherein the first panel has a recess (200-4) accessible through the first axial end, wherein the recess is arranged and dimensioned for holding a protrusion of a second blade segment, wherein the second panel is arranged to support an end of the protrusion.

2. Blade segment according to claim 1, a first surface (200-5) of the first panel (200-1) is essentially perpendicular to axis A, wherein the first surface extends over more than half of the chord length of the blade segment at the first panel's axial position along axis A.

3. Blade segment according to one of the preceding claims, wherein the first and second panels are mechanically connected to opposite ends of one or more struts (200-3) of the supporting device (200).

4. Blade segment according to one of the preceding claims, wherein the second panel has a projection extending towards the first panel, the projection being arranged for mechanically connecting with the protrusion of the second blade segment.

5. Blade segment according to one of the preceding claims, wherein the recess is arranged for materially connecting with the protrusion.

6. Blade segment according to one of the preceding claims, comprising two shells together forming the segment body and limiting the segment body's cavity, wherein an edge of one of the shells is materially connected with an edge of the other shell.

7. Blade segment according to claim 6, wherein the panel wall sections are mechanically and/or materially connected with a shell wall section of one of the shells.

8. Device to manufacture a blade segment according to one of the preceding claims, the device comprising a supporting device fixture (700) for aligning the supporting device inside the segment body's cavity or adjacent to one of the shells, preferably comprising a first resin supply arranged for supplying resin to materially connect the panel wall sections with the segment wall section.

9. Rotor blade for a wind turbine installation, the rotor blade comprising a first blade segment according to one of claims 1 to 8, and a second blade segment having a protrusion, wherein the protrusion can be arranged inside, preferably materially connected with an inner wall of, the recess of the supporting device of the first blade segment.

10. Rotor blade according to claim 10, wherein a gap between an inner surface of the recess and an outer surface of the protrusion does not exceed 12 mm, when the recess holds the protrusion.

11. Rotor blade according to one of claims 9 and 10, wherein a section of the protrusion extends into the second blade segment, preferably also designed according to one of claims 1 to 7, wherein said section is mechanically and/or materially connected inside the second blade segment.

12. Device to manufacture the rotor blade according to one of claims 9 to 11, comprising a blade segment fixture (400) arranged for supporting the first blade segment and the second blade segment, preferably arranged for guiding the second blade segment towards the first blade segment, a second resin supply (500) arranged for providing resin into the recess of the first blade segment, preferably having a heating device (600) for curing the resin inside the supporting device's recess.

13. Method to manufacture a blade segment according to one of claims 1 to 7, having the following steps:
S1 providing the segment body,
S2 positioning the supporting device inside the cavity,
S3 mechanically and/or materially connecting, preferably with a resin, the panel wall section with the segment wall section inside the cavity.

14. Method according to claim 13, wherein step S1 includes providing the first shell of claim 6, step S2 includes positioning the supporting device in contact with the inside of the first shell, step S1 includes positioning the second shell of claim 6 in contact with the supporting device and the first shell, such that an edge of the second shell is adjacent to an edge of the first shell (explain fixture).

15. Method to manufacture a rotor blade according to one of claims 9 and 10, preferably on an installation site, having the following steps:
S4 providing the first blade segment having the supporting device, and
S5 guiding the second blade segment having the protrusion towards the first blade segment, preferably with the device according to claim 12,
S6 mechanically and/or materially connecting the protrusion inside the recess.

16. Method according to claim 15 to manufacture a rotor blade according to claim 11, further having the step:
S7 mechanically and/or materially connecting a section of the protrusion inside the second blade segment such that the protrusion partly extends into the environment, preferably before step S5.
